# EUROPEAN PATENT SPECIFICATION

(11) **EP 1 886 604 B1**
(45) Date of publication and mention of the grant of the patent: **01.12.2010**
(21) Application number: 07015173.3
(22) Date of filing: 02.08.2007
(51) Int. Cl.: A47J 27/00, A47J 27/022, A47J 36/02

(54) **Additional bottom adapted to be fixed to the outer surface of the bottom of a vessel**
Zusätzlicher Boden zur Befestigung an der äußeren Oberfläche der Unterseite eines Gefäßes
Fond supplémentaire pour fixer à la surface inférieure d'une casserole

(30) Priority: 08.08.2006 IT MN20060054
(43) Date of publication of application: 13.02.2008
(73) Proprietor: ATTREZZERIA M.V. DI MARIN VISINO & C. S.n.c., 26041 Casalmaggiore (CR) (IT)
(72) Inventor: Marin, Visino, 26041 Casalmaggiore (CR) (IT)
(74) Representative: Alagem Modiano, Lara S.

(56) References cited:
- EP-A- 0 960 667
- JP-A- 2005 205 196

## Description

The present invention relates to an additional bottom adapted to be fixed to the outer surface of the bottom of a vessel.

It is known that aluminum alloy vessels for household use, such as pots and pans, designed to be placed in contact with a heat source to cook food, suffer some drawbacks, such as for example the fact that they are unable to cause the automatic activation of the induction plates which are increasingly widespread as heat sources included in household ranges and are notoriously activated by contact with steel elements.

The background art has therefore proposed to add to aluminum alloy vessels, at the outer surface of their bottom, an additional bottom made of steel and provided with holes which are filled by the material of the vessel during a step for coining in an appropriately provided die, thus providing the nonremovable locking of such additional bottom to the bottom of the vessel.

Document EP 0 960 667 A1 shows a vessel of this kind.

However, flash forms at the rim of the individual holes of the additional bottom and cannot be tolerated in the finished product because it is a source of possible damage to the plates on which the vessels are designed to rest, and therefore it becomes necessary to eliminate such flash by means of a machine-tool process with a consequent considerable cost increase.

The described problem relates not only to aluminum alloy vessels and additional bottoms made of steel, but also when the vessels and the additional bottoms are made of different materials.

The aim of the present invention is therefore to provide an additional bottom which can be fixed to the bottom of a vessel without having to provide finishing operations by means of a machine tool.

In accordance with the invention, there is provided a vessel with an additional bottom as defined in the appended claims.

Further characteristics and advantages of the present invention will become better apparent from the description of a preferred but not exclusive embodiment thereof, illustrated by way of non-limiting example in the accompanying drawings, wherein:

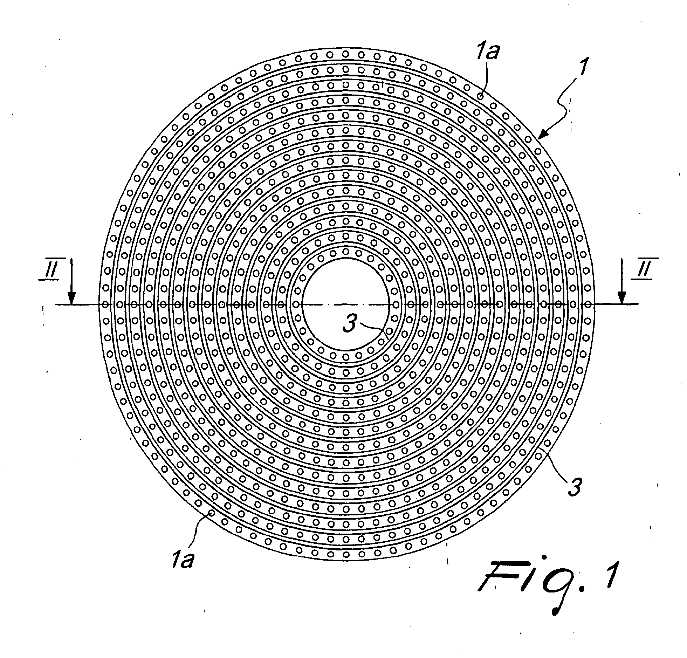

Figure 1 is a plan view of the additional bottom according to the invention;
Figure 2 is a sectional view, taken along the line II-II of Figure 1;
Figure 3 is a sectional view of a finished product.

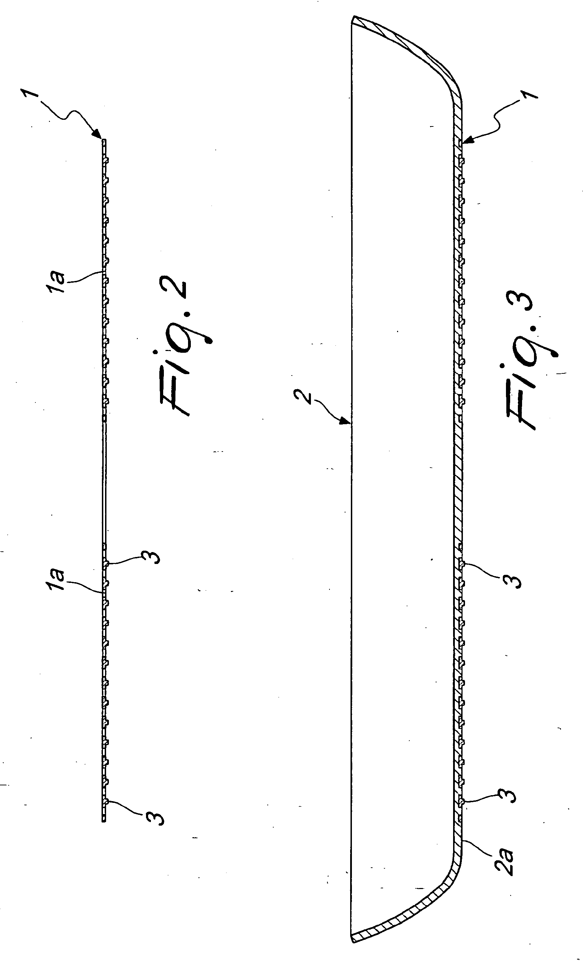

With reference to the figures, the reference numeral 1 generally designates the additional steel bottom provided in a known manner with through holes 1 a, which are designed to be filled by the material of an aluminum alloy vessel 2 during the coining step which fixes the additional bottom to the outer surface of the bottom of the vessel, as shown in Figure 3.

The bottom is flat with a raised edge so as to be fixed to the flat bottom of the vessel.

An important feature of the invention is constituted by the presence of protrusions 3 in the form of concentric circles, which protrude from an outer surface 2a of the bottom of the vessel 2.

In this manner, the resting contact of the vessel 2 on the plates of the ranges occurs at such protrusions and therefore any presence of flash at the rim of the holes 1a is irrelevant, thus removal of the flash is no longer required.

In the illustrated embodiment, it can be seen that the protrusions 3 are obtained as projections from a flat plate, but such protrusions might also be obtained by shaping a sheet having a constant thickness.

The described invention is susceptible of numerous other modifications and variations, all of which are within the scope of the appended claims: thus, for example, the protrusions may have any shape and the additional bottom may lie in contact with at least a portion of the wall of the vessel.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A vessel (2) comprising an additional bottom (1) fixed to an outer surface (2a) of the bottom of the main body of the vessel (2), said additional bottom (1) being provided with holes (1a) which are filled by the material of the vessel (2) during a coining step which fixes said bottom (1) to said vessel (2), said additional bottom (1) having a flat upper face which faces the vessel main body, said additional bottom (1) comprising a lower face with protrusions (3), **characterized in that** said protrusious (3) protrude from the outer surface (2a) of the bottom of the vessel (2).

2. The vessel (2) with the additional bottom (1) according to claim 1, **characterized in that** said additional bottom (1) is fixed to the flat bottom of the vessel main body.

3. The vessel (2) according to claim 1, **characterized in that** said additional bottom (1) is flat with a raised edge and is fixed to the flat bottom and at least partially to the wall of a vessel main body.

4. The vessel (2) with the additional bottom (1) according to one or more of the preceding claims, **characterized in that** said additional bottom (1) comprises protrusions (3) which extend from a flat plate.

5. The vessel (2) with the additional bottom (1) according to one or more of the preceding claims, **characterized in that** the protrusions (3) protrude from the contour of a sheet which has a constant thickness.

6. The vessel (2) with the additional bottom (1) according to one or more of the preceding claims, **characterized in that** the protrusions (3) are shaped like concentric circles.

## Patentansprüche

1. Ein Gefäß (2), das einen zusätzlichen Boden (1) umfasst, der an einer äußeren Oberfläche (2a) des Bodens des Hauptkörpers des Gefäßes (2) befestigt ist, wobei der zusätzliche Boden (1) mit Löchern (1a) versehen ist, die während eines Prägeschritts, der den Boden (1) an dem Gefäß (2) befestigt, mit dem Material des Gefäßes (2) gefüllt werden, wobei der zusätzliche Boden (1) eine flache obere Fläche hat, die zum Gefäß-Hauptkörper hin weist, wobei der zusätzliche Boden (1) eine untere Fläche mit Vorsprüngen (3) umfasst, **dadurch gekennzeichnet, dass** die Vorsprünge (3) aus der äußeren Oberfläche (2a) des Bodens des Gefäßes (2) herausragen.

2. Das Gefäß (2) mit dem zusätzlichen Boden (1) gemäß Anspruch 1, **dadurch gekennzeichnet, dass** der zusätzliche Boden (1) am flachen Boden des Gefäß-Hauptkörpers befestigt ist.

3. Das Gefäß (2) gemäß Anspruch 1, **dadurch gekennzeichnet, dass** der zusätzliche Boden (1) flach mit einer erhöhten Kante ist, und am flachen Boden und zumindest teilweise an der Wand eines Gefäß-Hauptkörpers befestigt wird.

4. Das Gefäß (2) mit dem zusätzlichen Boden (1) gemäß einem oder mehreren der obigen Ansprüche, **dadurch gekennzeichnet, dass** der zusätzliche Boden (1) Vorsprünge (3) umfasst, die sich von einer flachen Platte erstrecken.

5. Das Gefäß (2) mit dem zusätzlichen Boden (1) gemäß einem oder mehreren der obigen Ansprüche, **dadurch gekennzeichnet, dass** die Vorsprünge (3) aus der Kontur einer Platte herausragen, die eine konstante Dicke hat.

6. Das Gefäß (2) mit dem zusätzlichen Boden (1) gemäß einem oder mehreren der obigen Ansprüche, **dadurch gekennzeichnet, dass** die Vorsprünge (3) wie konzentrische Kreise geformt sind.

## Revendications

1. Récipient (2) comprenant un fond supplémentaire (1) fixé sur une surface externe (2a) du fond du corps principal du récipient (2), ledit fond supplémentaire (1) étant muni de trous (1a) qui sont remplis par le matériau du récipient (2) pendant une étape de frappe qui fixe ledit fond (1) sur ledit récipient (2), ledit fond supplémentaire (1) ayant une face supérieure plate qui fait face au corps principal de récipient, ledit fond supplémentaire (1) comprenant une face inférieure avec des saillies (3), **caractérisé en ce que** lesdites saillies (3) dépassent de la face externe (2a) du fond du récipient (2).

2. Récipient (2) avec le fond supplémentaire (1) selon la revendication 1, **caractérisé en ce que** ledit fond supplémentaire (1) est fixé sur le fond plat du corps principal de récipient.

3. Récipient (2) selon la revendication 1, **caractérisé en ce que** ledit fond supplémentaire (1) est plat avec un bord relevé et est fixé sur le fond plat et au moins en partie sur la paroi d'un corps principal de récipient.

4. Récipient (2) avec le fond supplémentaire (1) selon une ou plusieurs des revendications précédentes, **caractérisé en ce que** ledit fond supplémentaire (1) comprend des saillies (3) qui s'étendent à partir d'une plaque plate.

5. Récipient (2) avec le fond supplémentaire (1) selon une ou plusieurs des revendications précédentes, **caractérisé en ce que** les saillies (3) dépassent du contour d'une feuille qui a une épaisseur constante.

6. Récipient (2) avec le fond supplémentaire (1) selon une ou plusieurs des revendications précédentes, **caractérisé en ce que** les saillies (3) sont formées comme des cercles concentriques.
